# EUROPEAN PATENT APPLICATION

(11) **EP 3 407 202 A1**
(43) Date of publication of application: **28.11.2018**
(21) Application number: 16885911.4
(22) Date of filing: 06.04.2016
(51) Int. Cl.: G06F 17/16

(54) **MATRIX CALCULATION APPARATUS**

(30) Priority: 20.01.2016 CN 201610037535
(71) Applicant: Cambricon Technologies Corporation Limited, Beijing 100190 (CN)
(72) Inventor: CHEN, Yunji, Beijing 100190 (CN); ZHANG, Xiao, Beijing 100190 (CN); LIU, Shaoli, Beijing 100190 (CN); CHEN, Tianshi, Beijing 100190 (CN)
(74) Representative: AWA Sweden AB
(86) International application number: PCT/CN2016/078546
(87) International publication number: WO 2017/124647

(57) **Abstract**

The present disclosure relates to a matrix computing device comprising a storage unit, a register unit and a matrix operations unit, wherein matrices are stored in the storage unit, matrix storage addresses are stored in the register unit, and the matrix operations unit acquires a matrix address from the register unit according to a matrix operation instruction, and then acquires a corresponding matrix from the storage unit according to the matrix address, subsequently performing a matrix operation according to the acquired matrix so as to obtain a matrix operation result. The device temporarily stores matrix data involved in computation in a Scratchpad Memory, so that different data widths can be supported more flexibly and effectively during matrix operations, and execution of computing tasks comprising a large number of matrices can be improved.

## Description

### TECHNICAL FIELD

The subject disclosure relates to a matrix computing device for executing matrix operations according to a matrix operation instruction, offering a solution to the problem in the prior art where more and more algorithms involve a large number of matrix operations.

### BACKGROUND

In the current computer field, there are more and more algorithms involving matrix operation. For example, in artificial neural network algorithm, a plurality of neural network algorithms contain numerous matrix operations. In the neural network, operation expression of output neuron is y=f (wx+b), wherein w is matrix, x and b are matrices, and the process of computing the output matrix y is to multiply the matrix w by the matrix x, add the product to the matrix b, and then perform an activation function operation on the obtained matrix (i.e. to perform an activation function operation on each element in the matrix). Hence, the matrix operation now has become an important issue in designing various computing devices.

In the prior art, one solution to conduct matrix operation is to use a general-purpose processor by executing a general instruction via general-purpose register file and general-purpose functional unit to perform matrix operations. However, one defect of the solution is the low operation performance during matrix operation triggered because a single general-purpose processor is primarily used for scalar computation. On the other hand, using multiple general-purpose processors for concurrent execution may lead to a possible performance bottleneck resulting from the intercommunication among such processors.

In another prior art, matrix computation is conducted by using graphics processing unit (GPU), wherein general-purpose register file and general-purpose stream processing unit are used to execute general SIMD instructions, thereby performing matrix operation. Nonetheless, in the above-mentioned solution, GPU's on-chip small caching requires a constant transportation of off-chip data in performing large-scale matrix operations, which makes off-chip bandwidth a main performance bottleneck.

In another prior art, a specialized matrix operation device is used to perform matrix computation, wherein customized register file and processing unit are used to perform matrix operation. Limited by the register file, however, the present specialized matrix operation device is unable to flexibly support matrix operations of different lengths.

In the prior art, clearly, either the multi-core general processor on chip, or the inter-chip interconnected general processor (single or multi core), or inter-chip interconnected graphics processor is unable to perform an efficient matrix operation. Also, the current solutions, in performing matrix operations, are burdened with excessive codes, limited inter-chip communication, insufficient on-chip cache, and inflexible matrix size.

### SUMMARY

### Technical problems to be solved

The subject disclosure aims to provide a matrix computing device to solve the problems existing in the prior art, such as inter-chip communication, insufficient on-chip cache, and inflexible supported matrix length.

### Technical solution

The subject disclosure provides a matrix computing device used for executing a matrix operation according to a matrix operation instruction, comprising:

A storage unit for storing matrices.

A register unit for storing matrix addresses, wherein matrix addresses are the addresses where matrices are stored in the storage unit.

A matrix operations unit for acquiring a matrix operation instruction, obtaining a matrix address from the register unit according to the matrix operation instruction, and then gaining a corresponding matrix from the storage unit according to the matrix address, subsequently performing a matrix operation according to the acquired matrix so as to have a matrix operation result.

### Achievements.

The matrix computing device in the subject disclosure is able to temporarily store matrix data involved in computation in a Scratchpad Memory, allowing matrix operation to support widths with different data more flexibly and effectively while enabling an improved performance for executing computing tasks comprising a large number of matrices.

### BRIEF DESCRIPTION OF THE DRAWINGS

Fig. 1 is a structure diagram of the matrix computing device provided by the subject disclosure.
Fig. 2 is a format diagram of the instruction set provided by the subject disclosure.
Fig. 3 is a structure diagram of the matrix computing device provided by the embodiments of the subject disclosure.
Fig. 4 is a flowchart illustrating the process that the matrix computing device provided by the embodiments of the subject disclosure executes a matrix dot product instruction.
Fig. 5 is a flowchart showing the process that the matrix computing device provided by the embodiments of the subject disclosure performs a power multiplication to calculate the eigenvector corresponding to the maximum eigenvalue of a an inregulable matrix.
Fig. 6 is a structure diagram of the matrix operations unit provided by the embodiments of the subject disclosure.

### EXAMPLES

A matrix computing device of the present disclosure comprises a storage unit, a register unit and a matrix operations unit, wherein matrices are stored in the storage unit, matrix storage addresses are stored in the register unit, and the matrix operations unit acquires a matrix address from the register unit according to a matrix operation instruction, and then acquires a corresponding matrix from the storage unit according to the matrix address, subsequently performs a matrix operation according to the acquired matrix so as to obtain a matrix operation result. The matrix computing device in the subject disclosure is able to temporarily store matrix data involved in computation in a Scratchpad Memory, allowing in the process of matrix operation to support data with different widths more flexibly and effectively while enabling an improved performance for executing computing tasks comprising a large number of matrices.

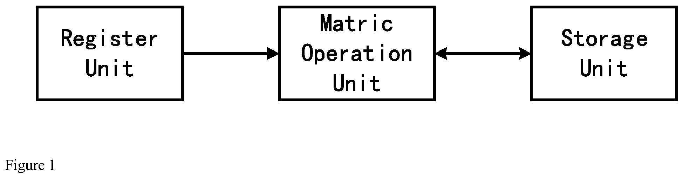

Fig. 1 is a structure diagram of the matrix computing device provided by the subject disclosure. As shown in Fig. 1, the matrix computing device comprises:
a storage unit for storing matrices; in one embodiment, the storage unit can be a Scratchpad Memory capable of supporting matrix data of different sizes; in the subject disclosure, the necessary computational data are temporarily stored in the Scratchpad Memory to enable the computing device to more flexibly and effectively support data of different widths during matrix operations.
a register unit for storing matrix addresses, wherein matrix addresses are the ones where the matrices are stored in the storage unit; in one embodiment, the register unit can be a scalar register file providing a scalar register as required during operations, and the scalar register stores matrix addresses as well as scalar data. when matrix and scalar operations are involved, the matrix operations unit is not only to acquire a matrix address from the register unit, but also to obtain a corresponding scalar from the register unit.
a matrix operations unit for acquiring a matrix operation instruction, obtaining a matrix address from said register unit according to the matrix operation instruction, and then obtaining a corresponding matrix from the storage unit according to the matrix address, subsequently performing a matrix operation according to the acquired matrix so as to obtain a matrix operation result and store the matrix operation result in the storage unit. The matrix operations unit comprises a matrix addition element, a matrix multiplication element, a comparison element, a nonlinear operation element and a matrix-scalar-multiplication element; furthermore, the matrix operations unit is of the structure of multiple-stage pipeline, wherein preferably the matrix addition element and the matrix multiplication element are arranged in the first stage of pipeline, the comparison element in the second stage, and the nonlinear operation element and the matrix-scalar-multiplication element in the third stage. Due to the fact that such elements are arranged in different stages of pipeline, when the order of the successive serial multiple matrix operation instructions is consistent with pipeline order of the corresponding units, the operations as demanded by the series of matrix operation instructions can be more effectively achieved. All the matrix operations of the device are performed by the matrix operations unit, including but not limited to matrix addition operation, matrix added to scalar operation, matrix subtraction operation, scalar subtracted from matrix operation, matrix multiplication operation, matrix multiplied by scalar operation, matrix division (contrapuntally divided) operation, matrix AND operation, and matrix OR operation, and the matrix operation instructions are sent to the operations unit for execution.

According to one embodiment of the subject disclosure, the matrix computing device further comprises an instruction cache unit for storing a matrix operation instruction to be executed. While being executed, an instruction is cached in the instruction cache unit as well. When execution of an instruction has been completed, if such instruction is also the earliest one among those instructions in the instruction cache unit that have not been submitted, then it will be submitted; once such instruction is submitted, the status change of the device caused by operation performed by such instruction cannot be cancelled. In one embodiment, the instruction cache unit can be a reorder cache.

According to one embodiment of the subject disclosure, the matrix computing device further comprises an instruction processing unit for acquiring a matrix operation instruction from the instruction cache unit and processing the matrix operation instruction and providing it to said matrix operations unit, wherein the instruction processing unit comprises:
an instruction fetching module for acquiring a matrix operation instruction from the instruction cache unit;
a decoding module for decoding the acquired matrix operation instruction;
an instruction queue for performing a sequential storage for the decoded matrix operation instruction, and, considering the possible dependency relationship between different instructions on the register, for caching the decoded instruction, and sending the instruction when the dependency relationship is satisfied.

According to one embodiment of the subject disclosure, the matrix computing device further comprises a dependency relationship processing unit for: before the matrix operations unit acquires the matrix operation instruction, determining whether the matrix operation instruction accesses the same matrix as the previous matrix operation instruction: if it does, the matrix operation instruction will be stored in a storage queue, and that matrix operation instruction in the storage queue will then be provided to said matrix operations unit until the execution of the previous matrix operation instruction is completed; otherwise, the matrix operation instruction will be directly provided to said matrix operations unit. Specifically, when the matrix operation instruction accesses the Scratchpad Memory, successive instructions may access the same memory space, and to ensure the correctness of an execution result of the instruction, the present instruction, if detected to have a dependency relationship with data of a previous instruction, must wait within the storage queue until such dependency relationship is eliminated.

According to one embodiment of the subject disclosure, the matrix computing device further comprises an in-out unit for storing matrices in the storage unit or acquiring a matrix operation result from the storage unit, wherein the in-out unit can directly connect with the storage unit and is used for reading or writing matrix data from or in the memory.

According to one embodiment of the subject disclosure, structure of Load/Store is applied to the instruction set used for the subject disclosure, and the matrix operations unit will not operate data in the internal storage. Preferably, the instruction set adopts fixed length instructions at the same time.

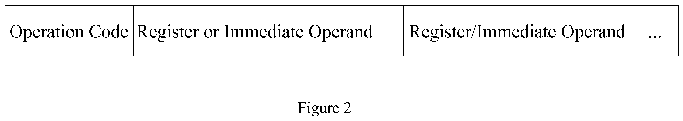

Fig.2 is a format diagram of the instruction set provided by the subject disclosure. As shown in Fig. 2, the matrix operation instruction includes an operation code and at least one operation field, wherein the operation code is used for indicating function of the matrix operation instruction, and the matrix operations unit is to perform different matrix operations by identifying the operation code; and the operation field is used for indicating data information of the matrix operation instruction, wherein data information can be an immediate operand or a register number. For example, to acquire a matrix, matrix starting address and matrix length can be obtained from the corresponding register according to a register number, and then the matrix stored in the corresponding address can be obtained from the storage unit according to the matrix starting address and matrix length.

The instruction set comprises matrix operation instructions different in function.

Matrix Multiplying Vector Instruction (MMV). According to the instruction, the device fetches matrix data and Vector data with specified size from specified addresses of the Scratchpad Memory to perform multiplication between matrix and Vector in the matrix operations unit, and writes the result back into a specified address of the Scratchpad Memory; it should be noted that Vector can be stored as a matrix of a specific form (with only one row of elements) in the Scratchpad Memory.

Vector Multiplying Matrix Instruction (VMM). According to the instruction, the device fetches Vector data and matrix data with a specified size from specified addresses of the Scratchpad Memory to perform multiplication between Vector and matrix in the matrix operations unit, and writes the result back into a specified address of the Scratchpad Memory; it should be noted that Vector can be stored as a matrix of a specific form (with only one row of elements) in the Scratchpad Memory.

Matrix Multiplying Scalar Instruction (VMS). According the instruction, the device fetches matrix data of a specified size from a specified address of the Scratchpad Memory and scalar data of a specified size from a specified address of the scalar register file, multiplies scalar and matrix in the matrix operations unit and writes the result back into a specified address of the Scratchpad Memory. It should be noted that scalar register file stores both the matrix address and scalar data.

Tensor Operation Instruction (TENS). According to the instruction, the device respectively fetches two blocks of matrix data of a specified size from two specified addresses of the Scratchpad Memory, performs a tensor operation on the two matrix data in the matrix operations unit, and writes the result back into a specified address of the Scratchpad Memory;
Matrix Addition Instruction (MA). According to the instruction, the device fetches two blocks of matrix data of two specified size from two specified addresses of the Scratchpad Memory, performs an addition operation for the two matrices in the matrix operations unit, and writes the result back into a specified address of the Scratchpad Memory;
Matrix Subtraction Instruction (MS). According to the instruction, the device fetches two blocks of matrix data of a specified size respectively from two specified addresses of the Scratchpad Memory, performs a subtraction operation for the two matrices in the matrix operations unit, and writes the result back into a specified address of the Scratchpad Memory;
Matrix Retrieval Instruction (MR). According to the instruction, the device fetches vector data of a specified size from a specified address of the Scratchpad Memory, and fetches matrix data of a specified size from a specified address of the Scratchpad Memory, wherein the vector in matrix operations unit is an index vector, and the i^{th} element in an outputted vector is the number found in the i^{th} column of the matrix by using the i^{th} element of the index vector as an index, and the outputted vector is written back into a specified address of the Scratchpad Memory;
Matrix Load Instruction (ML). According to the instruction, the device loads data of a specified size from a specified external source address to a specified address of the Scratchpad Memory;
Matrix Storage Instruction (MS). According to the instruction, the device stores matrix data of a specified size from a specified address of the Scratchpad Memory into an external destination address;
Matrix Movement Instruction (MMOVE). According to the instruction, the device stores matrix data of a specified size from a specified address of the Scratchpad Memory into another specified address of the Scratchpad Memory;
The term of "specified size" involved in the above instructions means that data length can be set by users based on practical requirements, that is, the length is changeable.

More details are provided as follows in reference with examples and drawings to have a full understanding of the advantages and technical solution of the present disclosure.

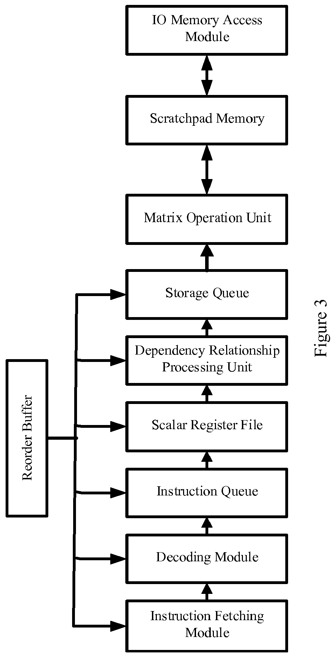

Fig. 3 is a structure diagram of the matrix computing device provided by the embodiments of the subject disclosure. As shown in Fig. 3, the device comprises an instruction fetching module, a decoding module, an instruction queue, a scalar register file, a dependency relationship processing unit, a storage queue, a reorder buffer, a matrix operations unit, a Scratchpad Memory, and an IO memory access module;
The instruction fetching module is responsible for fetching the next instruction to be executed from the instruction sequence and transmitting the instruction to the decoding module;
The decoding module is responsible for decoding the instruction and transmitting the decoded instruction to the instruction queue;
The instruction queue is responsible for: considering the possible dependency relationship between different instructions on the scalar register, caching the decoded instruction and then sending the instruction when the dependency relationship is satisfied.

The scalar register file is to provide the device with scalar register as needed in operations;
The dependency relationship processing unit is responsible for processing the possible storage dependency relationship between the instruction to be processed and its previous instruction. The matrix operation instruction would access the Scratchpad Memory, and successive instructions may access the same memory space. To ensure the correctness of an execution result of the instruction, the current instruction, if detected to have a dependency relationship with data of the previous instruction, must wait within the storage queue until such dependency relationship is eliminated.

The storage queue is a module with a sequential queue, wherein an instruction having a dependency relationship with the previous instruction in terms of data is stored in such queue until the dependency relationship is eliminated;
The reorder buffer: an instruction is cached in the module while being executed. When execution of an instruction has been completed, if such instruction is also the earliest one among those instructions in the reorder buffer that have not been submitted, then it will be submitted; once such instruction is submitted, the status change of the device caused by execution of such instruction cannot be cancelled;
The matrix operations unit is responsible for all the matrix operations of the device, including but not limited to matrix addition operation, matrix added to scalar operation, matrix subtraction operation, scalar subtracted from matrix operation, matrix multiplication operation, matrix multiplied by scalar operation, matrix division (contrapuntally divided) operation, matrix AND operation, and matrix OR operation, and the matrix operation instructions are sent to the operations unit for execution;
The Scratchpad Memory is a temporary storage device specialized for matrix data, and capable to support matrix data of different sizes;
An IO memory access module is for directly accessing the Scratchpad Memory, and for reading or writing data from or into the Scratchpad Memory.

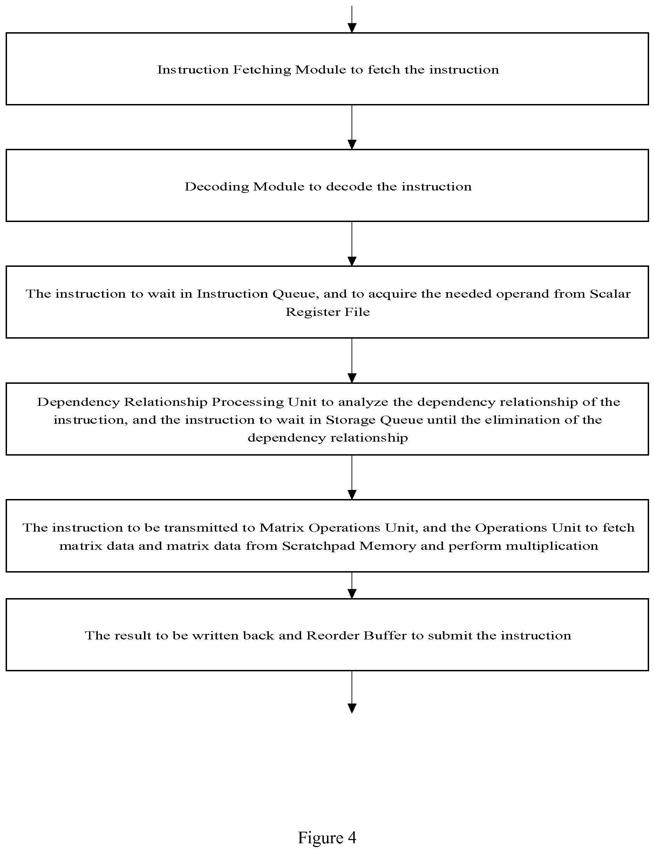

Fig. 4 is a flowchart illustrating the process that the matrix computing device provided by the embodiments of the subject disclosure executes a matrix multiplying vector instruction. As shown in Fig. 4, the process of performing the matrix multiplying vector instruction comprises:
S1: the instruction fetching module fetches the matrix multiplying vector instruction and transmits the instruction to the decoding module.
S2: the decoding module decodes the instruction, and sends the instruction to the instruction queue.
S3: In the instruction queue, the matrix multiplying vector instruction needs to acquire from the scalar register file the data of the scalar register corresponding to five operation fields in the instruction, including inputting vector address, inputting vector length, inputting matrix address and outputting vector address and length.
S4: after acquiring the needed scalar data, the instruction is sent to the dependency relationship processing unit. The dependency relationship processing unit analyzes whether there is a dependency relationship on data between the instruction and the previous instruction the execution of which has not been completed. The instruction needs to wait in the storage queue until it has no dependency relationship on data with the previous uncompleted instruction.
S5: after the dependency relationship does not exist any longer, the matrix multiplying vector instruction is transmitted to the matrix operations unit. The matrix operations unit fetches the needed matrix and vector data from the Scratchpad Memory according to address and length of the needed data. Subsequently, the multiplication is completed in the matrix operations unit.
S6: having completed the operation, the device writes the result back into a specified address of the Scratchpad Memory, and simultaneously the instruction in the reorder buffer is submitted.

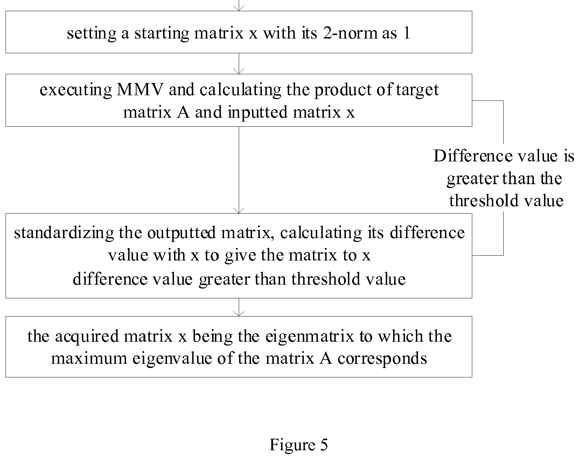

Fig. 5 is a flowchart showing that the matrix computing device provided by the embodiments of the subject disclosure performs a power multiplication to calculate the eigenvector corresponding to the maximum eigenvalue of an inregulable matrix. As illustrated in Fig. 5, it comprises:
Step 1: setting a starting vector x with an arbitrary 2-norm of 1;
Step 2: storing the starting vector x and the matrix A to be solved to the specified addresses of the specific Scratchpad Memory for vector and the specific Scratchpad Memory for matrix in device respectively by means of IO instruction;
Step 3: Performing Matrix Multiplying Vector Instruction (MMV), loading A and x from Scratchpad Memory and multiplying the matrix A and vector x in matrix operations unit, and performs a normalization operation to the obtained vector and compares the normalized vector with x, wherein x is assigned with the matrix and the method returns to Step 2 when the difference value is still greater than the threshold value;
Step 4: the obtained vector being the eigenmatrix to which the maximum eigenvalue of the inregulable matrix A corresponds; storing the outputted vector to a specific address and then to off-chip address space through IO instruction.

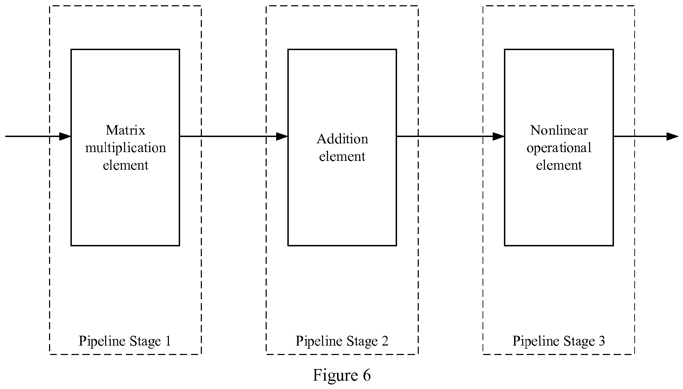

Fig. 6 is a structure diagram of the matrix operations unit provided by the present disclosure. As shown in Fig. 6, the matrix operations unit comprises a matrix addition element, a matrix multiplication element, a matrix scalar multiplication element and a nonlinear operation element. Furthermore, the matrix operations unit is in the structure of multiple-stage pipeline, wherein the matrix multiplication element and the matrix scalar multiplication element are arranged in pipeline stage 1, the matrix addition element in stage 2, and the nonlinear operation element in stage 3. Due to the difference of such elements in the stages of pipeline, when the order of the successive serial multiple matrix operation instructions is consistent with pipeline order of the corresponding units, the operations as demanded by the series of matrix operation instructions can be more effectively achieved.

As such, the subject disclosure provides a matrix computing device for offering a solution to the problem in the prior art where more and more algorithms involve a large number of matrix operations. Different from the traditional solutions, the present disclosure features such advantages as easy to use, supportive in various matrices and sufficient on-chip cache. The present disclosure is useful in many computing tasks involving numerous matrix operations, including the reversal training and forward prediction in the popular artificial neural network algorithm as well as the traditional numerical computation method of power multiplication for calculating maximum eigenvalue of an irregulable matrix.

While the disclosure has been illustrated by reference to specific embodiments, it should be understood that the disclosure is intended not to be limited by the foregoing description, but to be defined to perform the examples thereof. In other words, any modification, equivalent replacement or improvement thereof should all fall into the protection scope of the present disclosure.

## Claims

1. A matrix operations device for executing a matrix operation according to a matrix operation instruction, comprising:
a storage unit for storing matrices; and
a register unit for storing the matrix addresses, wherein the matrix addresses are the addresses where the matrices are stored in the storage unit;
a matrix operations unit for acquiring the matrix operation instruction, obtaining a matrix address from the register unit according to the matrix operation instruction, and then obtaining a corresponding matrix from the storage unit according to the matrix address, subsequently performing the matrix operation according to the acquired matrix so as to obtain a matrix operation result.

2. The matrix operations device according to Claim 1, further comprising:
an instruction cache unit for storing the matrix operation instruction to be executed.

3. The matrix operations device according to Claim 2, further comprising:
an instruction processing unit for acquiring the matrix operation instruction from the instruction cache unit, processing the matrix operation instruction and providing it to said matrix operations unit.

4. The matrix operation device according to Claim 3, wherein the instruction processing unit comprises:
an instruction fetching module for acquiring the matrix operation instructions from the instruction cache unit;
a decoding module for decoding the acquired matrix operation instruction;
an instruction queue for performing a sequential storage for the decoded matrix operation instruction.

5. The matrix operation device according to Claim 1, further comprising:
a dependency relationship processing unit for: before the matrix operations unit acquires the matrix operation instruction, determining whether the matrix operation instruction accesses a same matrix as a previous matrix operation instruction: if it does, the matrix operation instruction will not be provided to said matrix operations unit until the execution of the previous matrix operation instruction is completed; otherwise, the matrix operation instruction will be directly provided to said matrix operations unit.

6. The matrix operation device according to Claim 5, wherein when the matrix operation instruction accesses the same matrix as the previous matrix operation instruction, said dependency relationship processing unit stores the matrix operation instruction in a storage queue, and will not provide that matrix operation instruction in the storage queue to said matrix operations unit until the execution of the previous matrix operation instruction is completed.

7. The matrix operation device according to Claim 1, wherein said storage unit is also used for storing said matrix operation result.

8. The matrix operation device according to Claim 6, further comprising:
an input-output unit for storing the matrices in said storage unit or acquiring the matrix operation result from said storage unit.

9. The matrix operation device according to Claim 6, wherein said storage unit is a Scratchpad Memory.

10. The matrix operations device according to Claim 1, wherein said matrix operation instruction includes an operation code and at least an operation field, wherein the operation code is used for indicating a function of the matrix operation instruction, and the operation field is used for indicating data information of the matrix operation instruction.

11. The matrix operations device according to Claim 1, wherein said matrix operations unit comprises a matrix addition element, a matrix multiplication element, a matrix-scalar-multiplication element and a nonlinear operation element.

12. The matrix operations device according to Claim 11, wherein said matrix operations unit is of the structure of multiple-stage pipeline, wherein the matrix multiplication element and the matrix-scalar-multiplication element are arranged in the first stage of pipeline, the matrix addition element in the second stage, and the nonlinear operation element in the third stage.
